# FASCICULE DE BREVET EUROPEEN

(11) **EP 0 726 743 B1**
(45) Date de publication et mention de la délivrance du brevet: **26.08.1998**
(21) Numéro de dépôt: 93921989.5
(22) Date de dépôt: 04.10.1993
(51) Int. Cl.: A61C 17/02

(54) **DISPOSITIF DE PULVERISATION DESTINE AU NETTOYAGE DES DENTS**
SPRüHVORRICHTUNG FüR DIE ZAHNREINIGUNG
TOOTH-CLEANING SPRAY DEVICE

(30) Priorité: 08.10.1992 FR 9211970
(43) Date de publication de la demande: 21.08.1996
(73) Titulaire: SABBAH, Claude, F-75008 Paris (FR)
(72) Inventeur: SABBAH, Claude, F-75008 Paris (FR)
(74) Mandataire: Gasquet, Denis
(86) Numéro de dépôt international: FR9300974
(87) Numéro de publication internationale: WO9408533

(56) Documents cités:
- EP-A- 0 322 223
- DD-A- 206 535
- DE-A- 1 566 268
- DE-A- 3 024 749
- DE-B- 1 053 741
- DE-C- 831 868
- FR-A- 2 334 423
- US-A- 4 906 187

## Description

La présente invention concerne un dispositif de pulvérisation à usage médical, destiné au nettoyage des dents.

Il existe déjà dans le commerce, des dispositifs créant un jet d'eau destinés à être utilisés pour le nettoyage des dents. Ces dispositifs destinés au grand public pour un usage dentaire, sont actionnés par une petite pompe qui met en mouvement l'eau distribuée à partir d'un réservoir. De ce fait, le jet d'eau obtenu n'est donc créé que par l'eau en mouvement et n'est qu'un jet pulsé. Ils laissent toutefois la possibilité d'utiliser un médicament à condition de le diluer au préalable dans le réservoir d'eau. Ceci ne permet pas en particulier, d'en contrôler l'usage en modulant son emploi.

On connait notamment un dispositif décrit dans le brevet EP.A. 0 322 223 qui comporte deux reservoirs reliés à un dispositif de mise en pression permettant d'envoyer le liquide des reservoirs vers une tête de projection, un tuyau reliant également le dispositif de mise en pression à une canalisation qui relie les reservoirs à la buse pour provoquer la pulvérisation.

La présente invention entend résoudre les inconvénients des dispositifs actuels et propose un nouveau type d'appareil particulièrement simple et fiable, portatif autonome et compact. Le dispositif de la présente invention améliore l'efficacité du nettoyage dentaire ou gingival par jet en utilisant un pulvérisateur délivrant un mélange air-eau. L'efficacité accrue est due à l'existence de fines gouttelettes d'eau et du jet d'air, l'ensemble exerçant un effet abrasif plus important et assurant une meilleure diffusion. Il permet en outre une oxygénation des gencives et des poches parodontales. Par ailleurs, il améliore la souplesse d'utilisation en prévoyant un réservoir distinct pour recevoir un produit additif comme un médicament, un dentifrice liquide ou un produit antiplaque dentaire. Son usage peut alors être contrôlé en en réglant le débit, ou modulé en commençant, ou au contraire en terminant par un rinçage à l'eau pure, par exemple. Il permet donc le nettoyage des dents et des espaces interdentaires, le nettoyage de la plaque dentaire et des débris alimentaires inaccessibles à la brosse à dent, l'application simultanée de produits de soin, l'oxygénation des gencives et des poches parodontales, et son usage est particulièrement indiqué lorsque les gencives sont fragiles ou déjà infectées, et lorsque la plaque dentaire est difficile à atteindre avec un brosse à dent.

Ainsi, selon l'invention, le dispositif de pulvérisation destiné au nettoyage des dents est du type comprenant au moins un réservoir associé à un boitier, ledit réservoir contenant un liquide étant relié à une buse de pulvérisation par l'intermédiaire d'un ensemble de conduits, tandis-que ledit réservoir est relié à un compresseur destiné à le mettre en pression et ainsi chasser le liquide vers la buse, ledit dispositif étant caractérisé en ce qu'il comprend un tuyau secondaire reliant le compresseur à l'ensemble de conduits, ledit compresseur étant du type électrique et étant intégré au boitier.

Selon une caractéristique complémentaire le tuyau secondaire relie le compresseur en au moins deux endroits de l'ensemble de conduits.

Selon une disposition préférée de l'invention, l'ensemble de conduits comprend une chambre de mélange reliée à la buse par un conduit de pulvérisation, ledit tuyau secondaire étant connecté à la chambre de mélange en un premier endroit, et audit conduit de pulvérisation en un deuxième endroit.

Par ailleurs, notons que le réservoir peut contenir de l'eau pure, ou un mélange d'eau avec un produit additif.

Selon l'un des modes de réalisation, le réservoir de liquide contient de l'eau et il est prévu un réservoir supplémentaire contenant un produit additif qui est relié au compresseur.

Selon un mode préféré, d'exécution, la partie supérieure du réservoir d'eau est reliée au compresseur par un premier tuyau d'alimentation en air, sa partie inférieure étant reliée au conduit de pulvérisation par un premier conduit de sortie d'eau, tandis que la partie supérieure du réservoir supplémentaire est reliée au compresseur par un deuxième conduit d'alimentation en air, sa partie inférieure étant reliée au conduit de pulvérisation par un second conduit de sortie, les deux conduits de sortie étant convergeants en un point de mélange, ledit point de mélange étant relié à la chambre de mélange par un conduit d'alimentation. Ledit conduit d'alimentation comprenant avantageusement un robinet de commande.

Par ailleurs, et avantageusement, la buse de pulvérisation est solidaire de l'extrémité d'une poignée de pulvérisation comprenant une partie élargie prolongée vers ladite buse par une partie tubulaire, ladite partie élargie comprenant la chambre de mélange.

D'autres caractéristiques et avantages de l'invention se dégageront de la description qui va suivre en regard des dessins annexés qui ne sont donnés qu'à titre d'exemples non limitatifs.

La figure 1 est une vue représentant de façon schématique, le principe général des dispositifs de pulverisation.

La figure 2 est une vue schématique similaire à la figure 1, illustrant une variante de réalisation.

La figure 3 est une vue extérieure en perspective d'un dispositif de l'invention.

La figure 4 illustre un détail d'exécution.

Les figures 5, 6, et 7 sont des vues similaires à la figure 2 montrant trois variantes d'exécution.

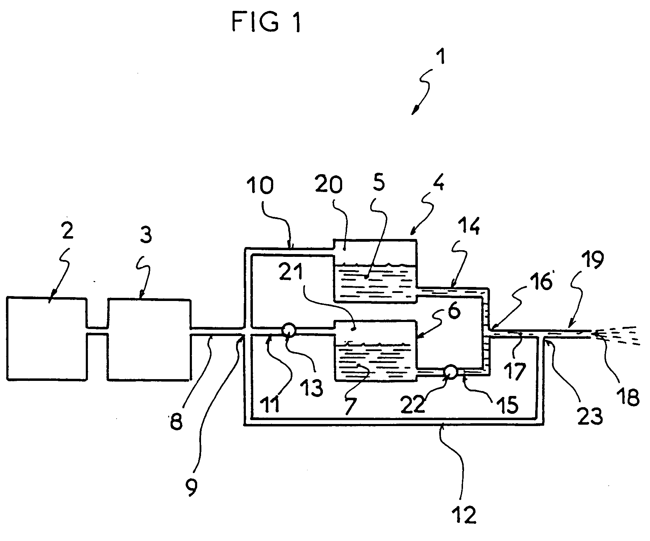

Notons que le dispositif de pulvérisation illustré figure 1 illustre le principe général des pulvérisateurs et n'est pas couvert par le champs de protection revendiqué de l'invention, il illustre le domaine technique de l'invention, pour en faciliter la compréhension.

La figure 1 illustre de façon schématique, un dispositif de pulvérisation, portant la référence générale (1) et qui comprend un compresseur d'air (2) dont la pression est limitée par un système de débrayage automatique qui alimente un réservoir d'air comprimé (3) muni éventuellement d'une valve permettant également de limiter la pression, et agissant comme sécurité supplémentaire en cas de défaillance du système de débrayage. Un dispositif de purge, distinct ou non de la valve, permettant de vider le réservoir d'air lors de l'arrêt de l'appareil. Par ailleurs, le dispositif comprend un réservoir principal (4) contenant de l'eau (5) mise sous pression par l'action de l'air comprimé, ainsi qu'un réservoir supplémentaire (6) contenant éventuellement un additif (7), comme un médicament, un dentifrice liquide ou un produit antiplaque dentaire.

Le réservoir d'air comprimé comprend à sa sortie, un tuyau d'alimentation en air comprimé (8) comprenant une dérivation (9) alimentant d'une part un premier tuyau d'alimentation (10) en air comprimé, et d'autre part, un deuxième tuyau d'alimentation (11) en air comprimé, ainsi qu'un tuyau secondaire (12). Ledit premier tuyau d'alimentation (10) est relié à la partie supérieure du réservoir principal d'eau (4), tandis que ledit deuxième tuyau d'alimentation (11) est, quant à lui, relié à la partie supérieure du réservoir supplémentaire (6). Par ailleurs, le tuyau d'alimentation en air (11) du réservoir supplémentaire comprend en amont, un robinet d'arrêt (13). A la partie basse de chacun des réservoirs (4, 6) est connecté un tuyau de sortie. Ainsi, au réservoir principal d'eau (4) est connecté un premier tuyau de sortie ou tuyau de sortie d'eau (14), et au réservoir supplémentaire (6) est connecté un deuxième tuyau de sortie ou tuyau de sortie de produit additif (15). Les deux tuyaux de sortie (14, 15) convergent l'un vers l'autre en un point de mélange (16), provoquant ainsi le mélange de l'eau (5) et du produit additif (7), formant ainsi le liquide (17) destiné à être pulvérisé par la buse de pulvérisation (18). Le point de mélange (16) étant relié a la buse de pulvérisation (18) par un conduit de pulvérisation (19). Afin d'assurer la pulvérisation du liquide de pulvérisation, le tuyau secondaire (12) connecté par l'une de ses extrémités, à la dérivation d'alimentation en air (9), est connecté par son autre extrémité, au conduit de pulvérisation (19). Sa connexion se faisant entre le point de mélange (16) et la buse de pulvérisation (18) proprement dite.

Grâce aux deux tuyaux d'alimentation (10, 11), le compresseur (2) alimente en air comprimé, les deux réservoirs (4, 6). Les deux enceintes correspondantes, respectivement (20, 21) sont donc mises en pression, et l'eau (5) du réservoir principal (4) est chassée dans le premier tuyau de sortie (14), tandis que le liquide contenant un additif (7) est, quant à lui, chassé dans le deuxième tuyau de sortie (15). Le mélange de l'eau (5) et du liquide contenant l'additif (7) se fait à la rencontre du premier tuyau de sortie (14) avec le second tuyau de sortie (15), c'est-à-dire au point de mélange (16).

Notons bien entendu que le robinet d'arrêt (13) permet de stopper la mise en pression du réservoir supplémentaire (6), donc d'arrêter le refoulement du liquide additionnel (7) dans son tuyau de sortie (15), tandis qu'un robinet de réglage (22) permet de contrôler et modifier l'usage dudit liquide additionnel (7). L'arrivée de l'air comprimé additionnel par le tuyau secondaire (12) dans le mélange eau-liquide additionnel, au point de connexion (23) crée un mélange air-liquide de pulvérisation et provoque sa pulvérisation à la sortie de la buse (18).

Bien entendu, le dispositif décrit précédemment au regard de la figure 1 qui est un dessin schématique, peut faire l'objet de variantes ou de modifications Ainsi, on pourrait prévoir la suppression du réservoir d'air comprimé (3). De même, le réservoir principal (4) pourrait avoir des dimensions différentes de celles du réservoir supplémentaire (6) On pourrait aussi prévoir de placer un robinet d'arrêt (130) sur le premier tuyau d'alimentation (10) et un robinet de réglage (220) sur le premier tuyau de sortie d'eau (14). Il serait aussi avantageux de placer un robinet de réglage sur le tuyau secondaire, permettant de stopper ou de régler le débit d'air additionnel de pulvérisation. Notons aussi que la rencontre et le mélange de l'eau (5) du réservoir principal (4) avec le liquide (7) du réservoir supplémentaire (6) au point de mélange pourraient se faire dans une chambre de mélange et l'on pourrait aussi placer un robinet sur le conduit de pulvérisation..

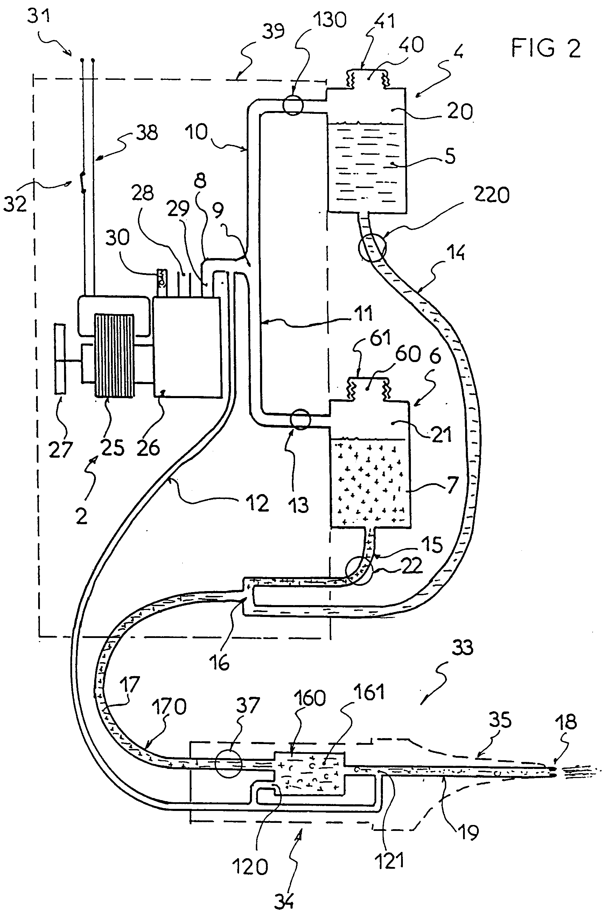

Les figures 2 à 4 illustrent un mode de réalisation du dispositif de pulvérisation selon l'invention.

La figure 2 est une figure similaire à la figure 1 qui illustre, de façon schématique, un mode de réalisation du dispositif de pulvérisation selon l'invention portant la référence générale (1) et qui comprend un compresseur d'air (2) constitué par un moteur électrique (25) mettant en mouvement le piston d'une chambre de compression (26). Le moteur (25) et le compresseur proprement dit (26) étant avantageusement refroidis par un ventilateur (27) monté sur l'arbre du moteur.

Par ailleurs, la chambre de compression (26) comprend un orifice d'admission (28) et un orifice de refoulement (29) et avantageusement une soupape de sécurité (30). Bien entendu, les orifices d'admission (28) et de refoulement (29) sont munis de systèmes de soupapes anti-retour. Le moteur (25) du compresseur est alimenté en courant électrique (31), l'alimentation se faisant grâce à des piles ou des batteries intégrées au dispositif ou grâce à un cordon de branchement (33) destiné à le connecter de façon classique sur une prise de courant. La mise en marche et l'arrêt du moteur étant assurés par un interrupteur (32).

Comme selon le mode d'exécution précédent, le dispositif de pulvérisation comprend un réservoir principal (4) contenant de l'eau (5) et un réservoir supplémentaire (6) contenant éventuellement un additif (7), comme un médicament, un dentifrice liquide ou un produit antiplaque dentaire.

L'orifice de refoulement (29) du compresseur est connecté à un tuyau d'alimentation en air comprimé (8) comprenant une dérivation (9) alimentant d'une part un premier tuyau d'alimentation (10) en air comprimé, et d'autre part, un deuxième tuyau d'alimentation (11) en air comprimé, ainsi qu'un tuyau secondaire (12). Ledit premier tuyau d'alimentation (10) est relié à la partie supérieure du réservoir principal d'eau (4), tandis que ledit deuxième tuyau d'alimentation (11) est, quant à lui, relié à la partie supérieure du réservoir supplémentaire (6). A la partie basse de chacun des réservoirs (4, 6) est connecté un conduit de sortie. Ainsi, au réservoir principal d'eau (4) est connecté un premier conduit de sortie ou conduit de sortie d'eau (14), et au réservoir supplémentaire (6) est connecté un deuxième conduit de sortie ou conduit de sortie de produit additif (15). Les deux conduits de sortie (14, 15) convergent l'un vers l'autre en un point de mélange (16), provoquant le mélange de l'eau (5) et du produit additif (7) formant le liquide de pulvérisation (17) qui grâce à un conduit de liquide (170) est amené dans une chambre de mélange (160). Ladite chambre de mélange (160) étant reliée à la buse de pulvérisation (18) par un conduit de pulvérisation (19). Afin d'assurer la pulvérisation optimale du liquide de pulvérisation, le tuyau secondaire (12) connecté par l'une de ses extrémités, à la dérivation d'alimentation en air (9), est connecté par son autre extrémité, d'une part à la chambre de mélange (160) en un point (120) et d'autre part au conduit de pulvérisation (19). Sa connexion audit conduit en un point (121) se faisant entre la chambre de mélange (160) et la buse de pulvérisation (18) proprement dite. Notons que l'arrivée en air comprimé dans la chambre de mélange (160) se fait à l'entrée de celle-ci, au niveau où se fait l'arrivée du liquide de pulvérisation (17). Par ailleurs, il est possible et même avantageux de placer un robinet de commande (37) sur le conduit (170) d'arrivée de liquide de pulvérisation grâce auquel l'utilisateur peut arrêter ou libérer l'arrivée du liquide dans la chambre de mélange. Le robinet de commande (37) est un robinet d'arrêt et de mise en marche mais il peut être avantageusement d'un type permettant de contrôler le débit du liquide de pulvérisation. Ainsi il peut être du type tel que plus la pression sur le bouton de commande est forte, plus le débit de liquide est important. L'utilisateur pouvant choisir son type de pulvérisation.

Comme précédemment et grâce aux deux tuyaux d'alimentation (10, 11), le compresseur (2) alimente en air comprimé, les deux réservoirs (4, 6). Les deux enceintes correspondantes, respectivement (20, 21) sont donc mises en pression, et l'eau (5) du réservoir principal (4) est chassée dans le premier conduit de sortie (14), tandis que le liquide contenant un additif (7) est, quant à lui, chassé dans le deuxième conduit de sortie (15). Le mélange de l'eau (5) et du liquide contenant l'additif (7) se faisant au point de mélange (16) afin que le liquide de pulvérisation (17) soit chassé dans la chambre de mélange (160) grâce au conduit d'alimentation (170).

La première arrivée d'air comprimé additif (120) par le tuyau secondaire (12) dans le mélange eau-additif, se fait dans la chambre de mélange (160) pour créer un premier mélange air-liquide (161) favorisant la pulvérisation. Tandis que la deuxième arrivée d'air comprimé additionnel (121) se fait après la chambre de mélange dans le mélange air-liquide (161). La deuxième arrivée d'air comprimé ajoute ainsi de l'air supplémentaire au liquide améliorant l'efficacité et le confort de la pulvérisation.

Bien entendu, chacun des réservoirs (4, 6) comprend une ouverture de remplissage (40, 60) fermée par un bouchon amovible (41, 61). Par ailleurs, la buse de pulvérisation (18) est solidaire de l'extrémité d'une poignée de pulvérisation (33) qui comprend une partie élargie (34) prolongée par une partie tubulaire (35). Ladite partie élargie (34) comprenant la chambre de mélange (160), tandis que l'extrémité de ladite partie tubulaire (35) comprend la buse de pulvérisation.

On peut aussi prévoir sur chacun des tuyaux d'alimentation (10), 11) un robinet d'arrêt, respectivement (13, 130). De même, il est aussi possible de placer sur l'un ou l'autre, voire même sur les deux tuyaux de sortie (14, 15), un robinet de réglage, respectivement (22), (220).

Bien entendu, les deux réservoirs (4, 6) pourraient avoir des dimensions identiques ou des dimensions différentes, et par exemple le réservoir supplémentaire (6) pourrait être d'une contenance inférieure à celle du réservoir d'eau principal (4).

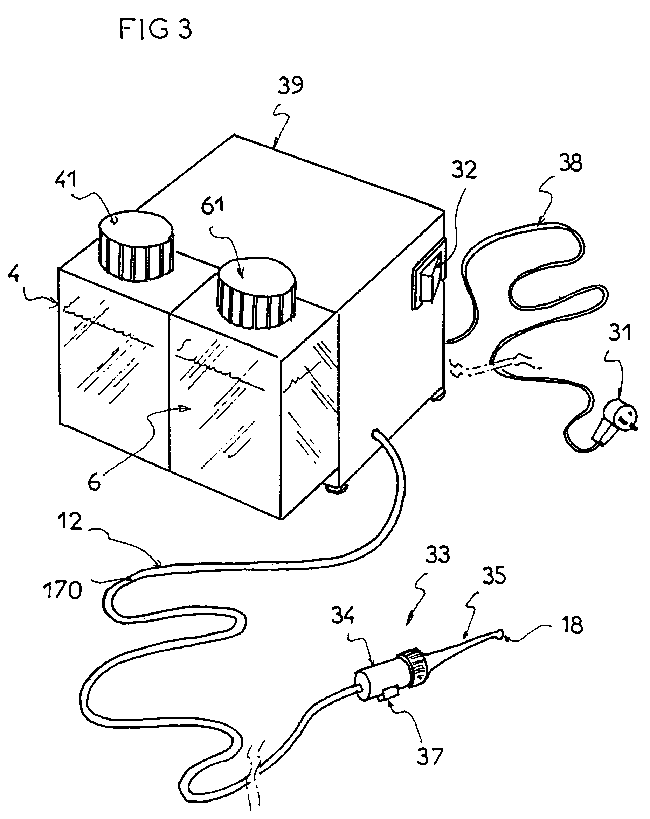

La figure 3 est une vue en perspective illustrant un exemple d'un dispositif de pulvérisation selon l'invention et notamment celui représenté schématiquement à la figure 2, selon lequel les deux réservoirs (4, 6) sont solidaires d'un boîtier (39) comprenant le compresseur (2). On notera que ledit boîtier comprend un interrupteur (32) de mise en marche du moteur (25) du compresseur (2), tandis qu'il comprend un cordon d'alimentation (38) et un tuyau (12, 170) le reliant à la poignée de pulvérisation (35).

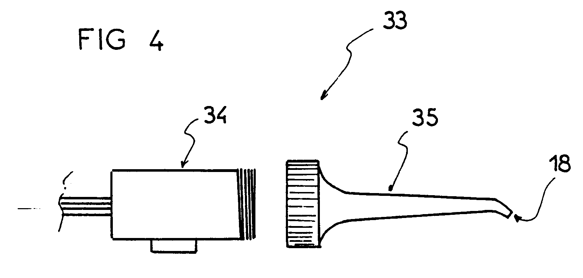

La figure 4 illustre un perfectionnement de la poignée de pulvérisation (33) selon laquelle la partie tubulaire (35) comprenant la buse de pulvérisation (18) est amovible afin que celle-ci soit nettoyée et/ou stérilisée.

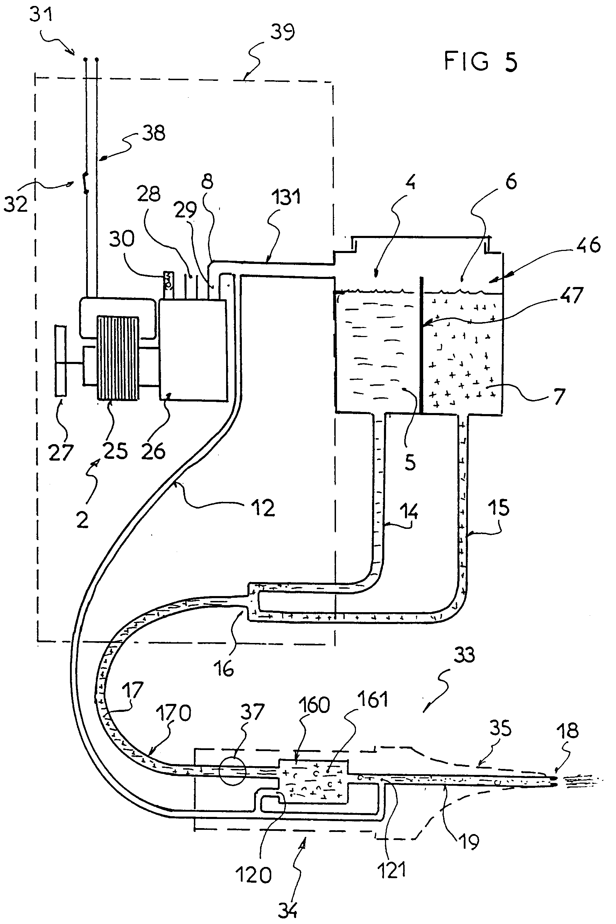

Il va de soit que les deux réservoirs (4, 6) qui sont distincts dans la réalisation de figures 1 à 3 pourraient ne pas être distincts et être formés, comme cela est illustré à la figure 5, par une seule enceinte (46) séparée par une cloison (47) pour former d'une part le réservoir d'eau (4) et d'autre part le réservoir supplémentaire (6) pour le produit additif.

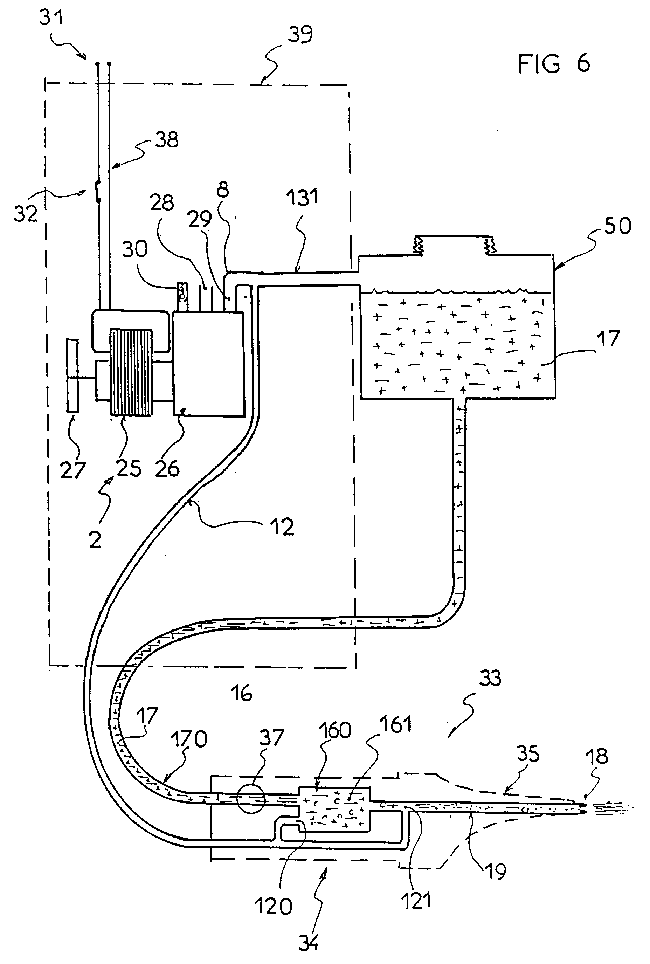

Bien entendu l'invention n'est pas limitée à un dispositif comprenant deux réservoirs (4, 6). En effet le dispositif pourrait sans pour autant sortir du cadre de l'invention ne comprendre qu'un seul réservoir (50) contenant le liquide de pulvérisation (17) constitué par un mélange d'eau (5) et de produit additif (7). Cette disposition est illustrée schématiquement à la figure 6.

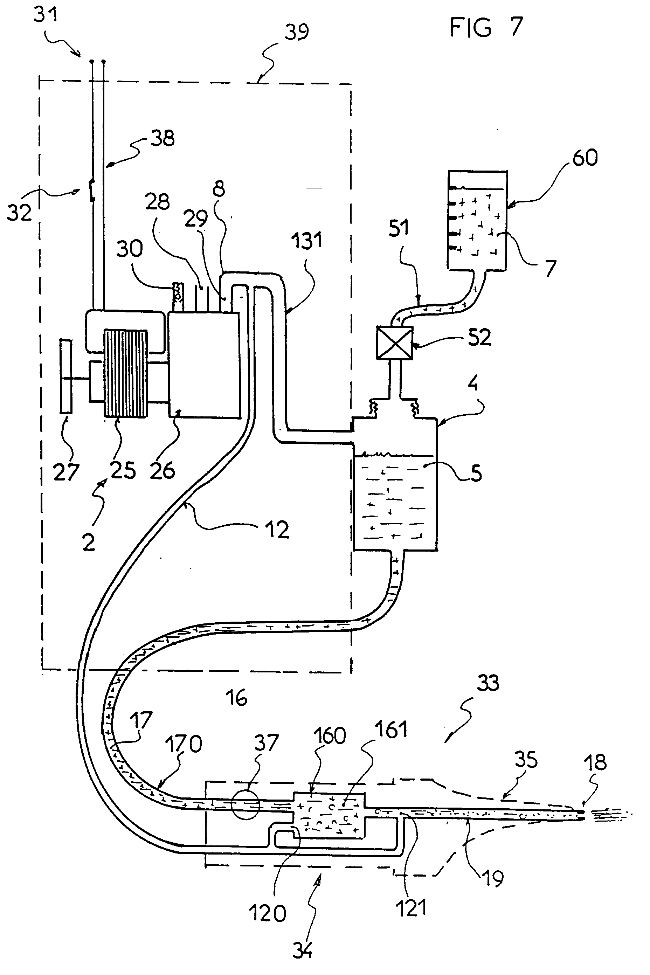

La figure 7 illustre une variante d'exécution selon laquelle le dispositif comprend deux réservoirs, le réservoir principal (4) pour l'eau (5) et le réservoir supplémentaire (60) pour le produit additif (7). Mais ledit réservoir supplémentaire (6) est relié audit réservoir principal (4) par un conduit intermédiaire (51) comprenant un robinet doseur (52) permettant de commander à volonté le passage d'une dose de produit additif du réservoir supplémentaire au réservoir principal.

## Revendications

1. Dispositif de pulvérisation destiné au nettoyage des dents du type comprenant au moins un réservoir (4, 6, 46, 50) associé à un boîtier (39), ledit réservoir contenant un liquide (5, 7, 17) étant relié à une buse de pulvérisation (18) par l'intermédiaire d'un ensemble de conduits (14, 15, 170, 19), tandis que ledit réservoir est relié à un compresseur (2) destiné à le mettre en pression et ainsi chasser le liquide vers la buse (18), caractérisé en ce qu'il comprend un tuyau secondaire (12) reliant le compresseur (2) en au moins deux endroits (120, 121) de l'ensemble de conduits, ledit compresseur étant du type électrique et étant intégré au boîtier.

2. Dispositif de pulvérisation destiné au nettoyage des dents selon la revendication 1, caractérisé en ce que l'ensemble de conduit comprend une chambre de mélange (160) reliée à la buse (18) par un conduit de pulvérisation (19).

3. Dispositif de pulvérisation destiné au nettoyage des dents selon la revendication 2, caractérisé en ce que le tuyau secondaire (12) est connecté à la chambre de mélange en un premier endroit (120), et audit conduit de pulvérisation en un deuxième endroit (121).

4. Dispositif de pulvérisation destiné au nettoyage des dents selon la revendication 3, caractérisé en ce que le conduit d'alimentation de liquide (170) comprend un robinet de commande (37).

5. Dispositif de pulvérisation destiné au nettoyage des dents selon la revendication 4, caractérisé en ce que le robinet de commande (37) est du type permettant de contrôler le débit du liquide de pulvérisation, permettant à l'utilisateur de choisir son type de pulvérisation.

6. Dispositif de pulvérisation destiné au nettoyage des dents selon l'une quelconque des revendications précédentes, caractérisé en ce que la buse de pulvérisation (18) est solidaire de l'extrémité d'une poignée de pulvérisation (33) comprenant une partie élargie (34) prolongée vers ladite buse par une partie tubulaire (35), ladite partie élargie (34) comprenant la chambre de mélange (160).

7. Dispositif de pulvérisation destiné au nettoyage des dents selon la revendication 6, caractérisé en ce que la partie tubulaire (35) de la poignée de pulvérisation (33) est démontable.

8. Dispositif de pulvérisation destiné au nettoyage des dents selon la revendication 7, caractérisé en ce que le ou les réservoirs (4, 6, 46, 50) sont amovibles.

9. Dispositif de pulvérisation destiné au nettoyage des dents selon l'une quelconque des revendications précédentes, caractérisé en ce que la partie supérieure du réservoir d'eau (4) est reliée au compresseur par un premier tuyau d'alimentation en air (10, 11, 131), sa partie inférieure étant reliée par un premier conduit de sortie d'eau (14, 17) à la chambre de mélange (160).

10. Dispositif de pulvérisation destiné au nettoyage des dents selon la revendication 9, caractérisé en ce que le réservoir (4, 6, 46, 50) contient de l'eau (5) ou un mélange d'eau (5) avec un produit additif (7).

11. Dispositif de pulvérisation destiné au nettoyage des dents selon la revendication 10, caractérisé en ce que le réservoir de liquide (4) contient de l'eau (5) et qu'il est prévu un réservoir supplémentaire (6) contenant un produit additif (7).

## Claims

1. Atomization device intended for cleaning teeth, of the type comprising at least one reservoir (4, 6, 46, 50) associated with a casing (39), the said reservoir containing a liquid (5, 7, 17) being connected to an atomization nozzle (18) by means of a set of pipes (14, 15, 170, 19), whilst the said reservoir is connected to a compressor (2) intended to pressurise it and thus drive the liquid towards the nozzle (18), characterised in that it comprises a secondary tube (12) connecting the compressor (2) at at least two points (120,121) on the set of pipes, the said compressor being of the electrical type and being integrated in the casing.

2. Atomization device intended for cleaning teeth according to Claim 1, characterised in that the set of pipes comprises a mixing chamber (160) connected to the nozzle (18) by an atomization pipe (19).

3. Atomization device intended for the cleaning of teeth according to Claim 2, characterised in that the secondary tube (12) is connected to the mixing chamber at a first point (120), and to the said atomization pipe at a second point (121).

4. Atomization device intended for cleaning teeth according to Claim 3, characterised in that the liquid supply pipe (170) comprises a control valve (37).

5. Atomization device intended for cleaning teeth according to Claim 4, characterised in that the control valve (37) is of the type enabling the flow of atomisation liquid to be controlled, enabling the user to choose his type of atomization.

6. Atomization device intended for cleaning teeth according to any one of the preceding claims, characterised in that the atomization nozzle (18) is fixed to the end of an atomization handle (33) comprising a broadened part (34) extended towards the said nozzle by a tubular part (35), the said broadened part (34) comprising the mixing chamber (160).

7. Atomization device intended for cleaning teeth according to Claim 6, characterised in that the tubular part (35) of the atomization handle (33) is demountable.

8. Atomization device intended for cleaning teeth according to Claim 7, characterised in that the reservoir or reservoirs (4, 6, 46, 50) are removable.

9. Atomization device intended for cleaning teeth according to any one of the preceding claims, characterised in that the top part of the water reservoir (4) is connected to the compressor by a first air supply tube (10, 11, 131), its bottom part being connected by a first water outlet pipe (14,17) to the mixing chamber (160).

10. Atomization device intended for cleaning teeth according to Claim 9, characterised in that the reservoir (4, 6, 46, 50) contains water (5) or a mixture of water (5) with an additive (7).

11. Atomization device intended for cleaning teeth according to Claim 10, characterised in that the liquid reservoir (4) contains water (5) and in that an additional reservoir (6) containing an additive (7) is provided.

## Patentansprüche

1. Sprühvorrichtung für die Zahnreinigung, von der Art, die mindestens einen einem Gehäuse (39) zugeordneten Behälter (4, 6, 46, 50) aufweist, wobei der eine Flüssigkeit (5, 7, 17) enthaltende Behälter mittels eines Leitungssystems (14, 15, 170, 19) mit einer Sprühdüse (18) in Verbindung steht und der Behälter des weiteren mit einem Kompressor (2) verbunden ist, der dazu vorgesehen ist, diesen mit Druck zu beaufschlagen und somit die Flüssigkeit zur Düse (18) hin zu fördern, dadurch gekennzeichnet, daß sie eine Sekundärleitung (12) aufweist, die den Kompressor (2) an mindestens zwei Stellen (120, 121) des Leitungssystems verbindet, wobei der Kompressor vom elektrischen Typ und in das Gehäuse integriert ist.

2. Sprühvorrichtung für die Zahnreinigung nach Anspruch 1, dadurch gekennzeichnet, daß das Leitungssystem eine mittels einer Sprühleitung (19) mit der Düse (18) verbundene Mischkammer (160) aufweist.

3. Sprühvorrichtung für die Zahnreinigung nach Anspruch 2, dadurch gekennzeichnet, daß die Sekundärleitung (12) an einer ersten Stelle (120) an die Mischkammer und an einer zweiten stelle (121) an die Sprühleitung angeschlossen ist.

4. Sprühvorrichtung für die Zahnreinigung nach Anspruch 3, dadurch gekennzeichnet, daß die Flüssigkeitszuführleitung (170) ein Steuerventil (37) aufweist.

5. Sprühvorrichtung für die Zahnreinigung nach Anspruch 4, dadurch gekennzeichnet, daß das Steuerventil (37) von der Art ist, welche eine Kontrolle des Durchsatzes der zu versprühenden Flüssigkeit gestattet, was es dem Anwender ermöglicht, eine Sprühart für sich auszuwählen.

6. Sprühvorrichtung für die Zahnreinigung nach einem der vorhergehenden Ansprüche, dadurch gekennzeichnet, daß die Sprühdüse (18) als Einheit mit dem Ende eines Sprühgriffstückes (33) ausgebildet ist, welches einen auf die Düse hin durch einen röhrenförmigen Abschnitt (35) verlängerten verbreiterten Abschnitt (34) aufweist, wobei der verbreiterte Abschnitt (34) die Mischkammer (160) beinhaltet.

7. Sprühvorrichtung für die Zahnreinigung nach Anspruch 6, dadurch gekennzeichnet, daß der röhrenförmige Abschnitt (35) des Sprühgriffstückes (33) demontierbar ist.

8. Sprühvorrichtung für die Zahnreinigung nach Anspruch 7, dadurch gekennzeichnet, daß der bzw. die Behälter (4, 6, 46, 50) abnehmbar ist bzw. sind.

9. Sprühvorrichtung für die Zahnreinigung nach einem der vorhergehenden Ansprüche, dadurch gekennzeichnet, daß das Oberteil des Wasserbehälters (4) mittels einer ersten Luftzufuhrleitung (10, 11, 131) mit dem Kompressor verbunden ist, und das Unterteil davon mittels einer ersten Wasserausgangsleitung (14, 17) mit der Mischkammer (160) verbunden ist.

10. Sprühvorrichtung für die Zahnreinigung nach Anspruch 9, dadurch gekennzeichnet, daß der Behälter (4, 6, 46, 50) Wasser (5) oder eine Mischung aus Wasser (5) und einem Zusatzprodukt (7) enthält.

11. Sprühvorrichtung für die Zahnreinigung nach Anspruch 10, dadurch gekennzeichnet, daß der Flüssigkeitsbehälter (4) Wasser (5) enthält, und daß ein zusätzlicher Behälter (6) ein Zusatzprodukt (7) enthält.
